# EUROPÄISCHE PATENTSCHRIFT

(11) **EP 2 206 931 B1**
(45) Veröffentlichungstag und Bekanntmachung des Hinweises auf die Patenterteilung: **17.04.2013**
(21) Anmeldenummer: 10150047.8
(22) Anmeldetag: 04.01.2010
(51) Int. Cl.: F16B 25/10, F16B 35/06

(54) **Schraube und ihre Verwendung**
Screw and its utilisation
Vis et son utilisation

(30) Priorität: 09.01.2009 DE 102009004639; 20.01.2009 DE 102009005916
(43) Veröffentlichungstag der Anmeldung: 14.07.2010
(73) Patentinhaber: Adolf Würth GmbH & Co. KG, 74653 Künzelsau (DE); Würth International AG, 7000 Chur (CH)
(72) Erfinder: Wunderlich, Andreas, 74653 Kupferzell (DE); Küenzlen, Jürgen, 71570 Oppenweiler (DE)
(74) Vertreter: Patentanwälte Ruff, Wilhelm, Beier, Dauster & Partner

(56) Entgegenhaltungen:
- EP-A1- 0 448 915
- EP-A1- 0 918 164
- DE-U1- 8 804 654
- DE-U1- 20 319 768
- DE-U1- 29 607 265

## Beschreibung

Die Erfindung betrifft eine Schraube zur Befestigung von Gegenständen an Porenbeton und ihre Verwendung.

Porenbeton, auch Gasbeton genannt, ist ein leichter poröser mineralischer Kalksandstein auf der Grundlage von Kalk-, Kalkzement oder Zementmörtel. Aufgrund seiner geringen Belastbarkeit treten beim Schrauben Probleme auf.

Es ist bereits eine Gasbeton-Schraube bekannt (DE 19852339), bei der der Durchmesser des Schraubenschafts von dem Einführende entlang eines wesentlichen Teils des Gewindes stetig zunimmt. Die Gewindekante des Gewindes ist im Einführbereich mit einer Verzahnung versehen. Die Verwendung des Schraubenschafts mit größer werdendem Durchmesser soll zu einer Materialverdichtung führen.

Ebenfalls bekannt sind Schrauben zum Anschrauben von Latten aus Holz auf einem Dach- oder Wandunterbau, die zwei Gewindeabschnitte mit unterschiedlicher Steigung aufweisen (DE 29805784). Derartige Schrauben sind für Gasbeton nicht geeignet, da wegen der unterschiedlichen Steigung auf den vorderen Bereich der Schraube Zugkräfte ausgeübt werden.

Weiterhin ist eine Distanzschraube bekannt (EP 918164 A1), die als gattungsbildend angesehen wird und zwei Gewindeabschnitte aufweist und bei der der Schraubenkopf einen Durchmesser aufweist, der mindestens gleich groß ist wie der äußere Durchmesser der Gewinde. Diese Distanzschraube ist zum Befestigen an einer Holzwand geeignet, müsste für die Verwendung an einer Betonmauer jedoch einen Gewindekopf besitzen.

Eine weitere Schraube zum Einsatz bei einem Unterdach weist zwei Gewindeabschnitte unterschiedlichen Durchmessers auf. Sie ist ebenfalls für ein aus Holz bestehendes Unterdach bestimmt (DE 29607265 U1).

Eine weitere zwei Gewindeabschnitte aufweisende Schraube (DE 20319768 U1) ist zum Anschrauben an einer aus Holz bestehenden Unterkonstruktionen bestimmt

Der Erfindung liegt die Aufgabe zu Grunde, eine sichere Befestigung von Holzelementen auf Porenbeton zu ermöglichen.

Zur Lösung dieser Aufgabe schlägt die Erfindung eine Schraube mit den im Anspruch 1 genannten Merkmalen und die Verwendung dieser Schraube zur Befestigung auf einer Unterlage aus Porenbeton vor. Weiterbildungen der Erfindung sind Gegenstand der jeweiligen Unteransprüche.

Zum Einschrauben der Schraube weist diese an ihrem Antriebsende eine Gestaltung auf, die das Ansetzen eines Werkzeugs ermöglicht. Es kann sich sowohl um eine Vertiefung in dem Ende des Schraubenschafts als auch um eine äußere Gestaltung handeln. Erfindungsgemäß ist in Weiterbildung auch vorgesehen, dass das Antriebsende des Schraubenschafts einen Schraubenkopf aufweist, der allerdings eine verhältnismäßig kleine Quererstreckung aufweist. Sein Außendurchmesser soll maximal das 1,5-fache des Außendurchmessers des Haltegewindes betragen. Vorzugsweise beträgt der Außendurchmesser des Schraubenkopfs das 1,3-fache des Außendurchmessers des Haltegewindes. Der Schraubenkopf ist nur dazu da, eine Ausnehmung zum Ansetzen eines Werkzeugs aufzunehmen, nicht aber dazu, axiale Kräfte zu übertragen. Die Festlegung des zu befestigenden Gegenstands geschieht ausschließlich über den Halteabschnitt mit seinem mindestens teilweise ausgebildeten Gewinde.

Das dem Antriebsende abgewandte vordere Ende des Schraubenschafts kann stumpf ausgebildet sein. In diesem Fall ist ein Vorbohren in dem Porenbeton und dem Holz erforderlich.

Es kann erfindungsgemäß in Weiterbildung vorgesehen sein, dass der Schraubenschaft einen von dem Antriebsende ausgehenden Halteabschnitt mit einem mindestens teilweise ausgebildeten Haltegewinde, einen sich daran anschließenden gewindefreien Schaftabschnitt und einen vorderen Einschraubabschnitt mit einem Gewinde und einem vorderen Schraubenende aufweist, wobei die Steigung der Gewinde in beiden Gewindeabschnitten gleich ist.

Dadurch, dass die beiden Gewindeabschnitte die gleiche Steigung aufweisen, wird dann, wenn das Gewinde des Halteabschnitts in dem zu befestigenden Gegenstand eingreift, keine Zugwirkung auf das Gewinde in dem Porenbeton ausgeübt. Die Schraube kann vollständig eingeschraubt werden, ohne dass beim Einschrauben eine Zugwirkung entsteht. Erst nach vollständiger Befestigung kann die Kraft, die an dem befestigten Gegenstand normalerweise angreift, aufgenommen werden. Insbesondere kann in Weiterbildung vorgesehen sein, dass der Schraubenkopf ein Zylinderkopf ist.

In nochmaliger Weiterbildung der Erfindung kann vorgesehen sein, dass das Gewinde in dem Einschraubabschnitt und/oder in dem Halteabschnitt ein DIN Holzgewinde ist. Dadurch gestaltet sich die Bemessung einfacher.

In dem Halteabschnitt braucht das Gewinde nicht vollständig ausgebildet zu sein, es kann hier auch durch einzelne Vorsprünge gebildet sein, die angenähert radial verlaufen und längs einer Schraubenlinie angeordnet sind.

In nochmaliger Weiterbildung der Erfindung kann vorgesehen sein, dass das Haltegewinde ein Doppelganggewinde ist, um dadurch eine besonders gute Verbindung zwischen der Schraube und dem zu befestigenden Holz zu gewährleisten.

Es hat sich als besonders sinnvoll herausgestellt, dass die Gewindehöhe des Gewindes im Einschraubabschnitt größer ist als im Halteabsch n itt.

Wenn die Spitze als kegelförmige Spitze ausgebildet ist, was von der Erfindung ebenfalls vorgeschlagen wird, braucht in dem Porenbeton nicht vorgebohrt zu werden.

In nochmaliger Weiterbildung der Erfindung kann vorgesehen sein, dass die Schraube beschichtet ist, wobei hier insbesondere eine Verzinkung oder eine Beschichtung mit einer Zinklamellenbeschichtung vorgesehen ist.

Die Erfindung schlägt ebenfalls die Verwendung einer solchen Schraube zur Befestigung eines Holzelements an einer Unterlage vor, die aus Porenbeton besteht, wobei die Festlegung des Holzelements im wesentlichen vollständig durch das Gewinde der Schraube in diesem Bereich erfolgt.

Die Befestigung geschieht derart, dass die Schraube durch das zu befestigende Holzelement hindurch in die Unterlage aus Porenbeton eingeschraubt wird, bis das äußere Ende der Schraube nicht mehr über die Oberfläche des zu befestigenden Holzelements vorsteht. Dies lässt sich optisch sehr einfach feststellen.

Bei Verwendung einer Schraube mit einem Halteabschnitt und einem Haltegewinde sowie mit einem hiervon durch einen gewindefreien Schaftabschnitt getrennten vorderen Einschraubabschnitt mit einem Gewinde wird die Schraube in der Weise verwendet, das der Einschraubabschnitt in der aus Porenbeton bestehenden Unterlage angeordnet ist, während der Halteabschnitt in dem zu befestigenden Holzelement angebracht ist.

Da die Befestigung an Porenbeton in erster Linie an Dächern geschieht, und bei Dächern traditionell Holz verwendet wird, wird in der hier vorliegenden Beschreibung der Ausdruck Holzelement verwendet. Es kann sich dabei allgemein aber auch um jedes andere Material handeln, das gegebenenfalls vorgebohrt werden muss. Unter Umständen ist auch ein Gewindeschneiden erforderlich.

Da die beiden Gewindeabschnitte die gleiche Steigung aufweisen, ist es ebenfalls möglich, ein Holzelement an einer Porenbetonunterlage unter Zwischenlage einer Isolierungsschicht zu befestigen. Diese Isolierschicht wird dabei nicht komprimiert oder verformt. Es kann insbesondere vorgesehen sein, dass der erwähnte gewindefreie Abschnitt zwischen den beiden Gewindeabschnitten dann innerhalb der Isolierschicht angeordnet ist. Bei der Isolierschicht kann es sich um Glaswolle, Gips, Porenbeton, Luft oder ähnliche isolierende Stoffe handeln.

Da die Schraube in erster Linie dazu bestimmt ist, an Dächern verwendet zu werden, kann in Weiterbildung vorgesehen sein, dass die Schraube unter einem Winkel gegenüber der Oberfläche des Holzelements eingeschraubt wird, der im Bereich von etwa 60° liegt.

Die Schraube eignet sich der Verwendung an Porenbeton der Härte in einem Bereich von PP 4.0. Auch die Isolierschicht kann aus einem Porenbeton der Härte 0,5 bestehen.

Erfindungsgemäß kann zur Reduzierung des Einschraubmoments das Gewinde eine Kerbe aufweisen, die beispielsweise über die gesamte Länge des Gewindes oder auch nur über einen von der Schraubenspitze ausgehenden Bereich verläuft.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: eine Seitenansicht einer Schraube nach der Erfindung;
- Figur 2: in vergrößertem Maßstab eine Seitenansicht des Antriebsendes der Schraube;
- Figur 3: einen Querschnitt durch den Schaft der Schraube längs Linie III-III in Figur 1;
- Figur 4: schematisch die Anordnung der Schrauben bei der Befestigung von Längslatten an einem Dach aus Porenbeton.

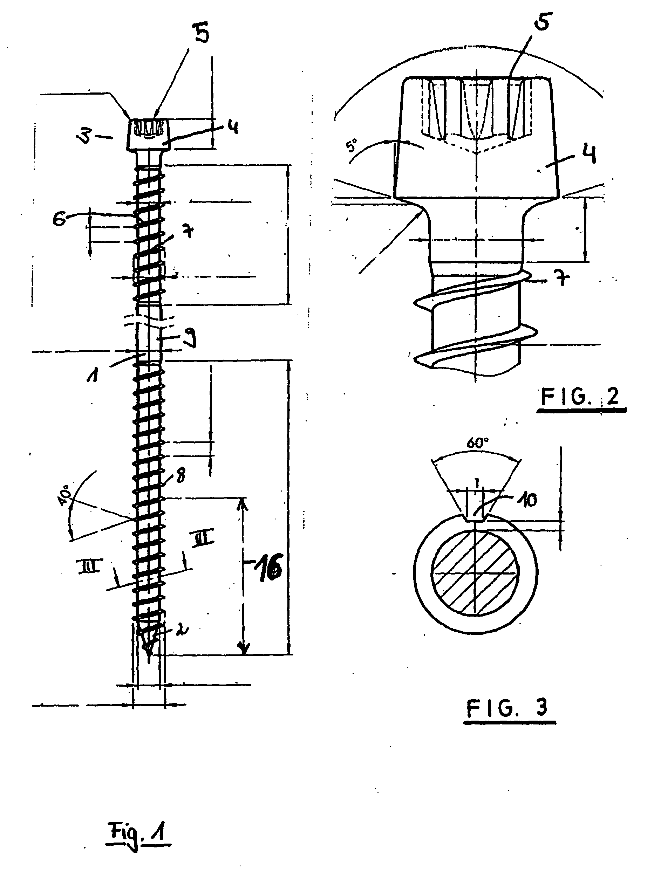

Die in Figur 1 dargestellte von der Erfindung vorgeschlagene Schraube enthält einen Schraubenschaft 1, der mit Ausnahme einer Schraubenspitze 2 einen konstanten Durchmesser aufweist. An dem in Figur 1 oberen Ende ist ein Antriebsende 3 ausgebildet, im dargestellten Beispiel mit einem Schraubenkopf 4. In der Stirnfläche 5 des Schraubenkopfs, die eben ausgebildet ist, ist eine Schraubenantriebsvertiefung angeordnet.

Unmittelbar an den Schraubenkopf 4 anschließend ist ein Halteabschnitt 6 gebildet, in dem im dargestellten Beispiel ein eingängiges Gewinde 7 auf den Schraubenschaft 1 aufgewalzt ist.

Von der kegelförmigen Schraubenspitze 2 ausgehend ist auf den Schraubenschaft 1 ein zweites Gewinde 8 aufgewalzt, bei dem es sich ebenfalls um ein eingängiges Gewinde handelt. Zwischen beiden Gewindeabschnitten ist ein gewindefreier Abschnitt 9 gebildet wo der Durchmesser des Schraubenschafts etwas größer ist als der Kerndurchmesser in den beiden mit jeweils einem Gewinde 7, 8 versehenen Abschnitten des Schraubenschafts 1.

Die Steigung beider Gewinde 7 und 8 ist identisch.

Der Durchmesser des Schraubenkopfs 4 entspricht etwa dem 1,3 fachen des Außendurchmessers des Gewindes 7, 8 in beiden Abschnitten des Schraubenschafts 1.

Einzelheiten des Schraubenkopfs 4 sind in Figur 2 dargestellt. Bei dem Schraubenkopf handelt es sich um einen Zylinderkopf, dessen Unterseite abgerundet in den Schraubenschaft 1 übergeht.

In dem vorderen Bereich der Schraube unmittelbar angrenzend an die kegelförmige Schraubenspitze 2 weist das Gewinde eine Kerbe 10 auf, die in dem Querschnitt der Figur 3 zu sehen ist. Diese Kerbe 10 erstreckt sich im dargestellten Ausführungsbeispiel nur über den vorderen Bereich des Einschraubabschnitts, wie dies beispielsweise durch die Strecke 16 angedeutet ist. Die Form der Kerbe 10 mit einem ebenen Boden und zwei divergierenden Seitenwänden ist in Figur 3 dargestellt. Die Kerbe könnte sich auch über die gesamte Länge des Gewindes 8 erstrecken.

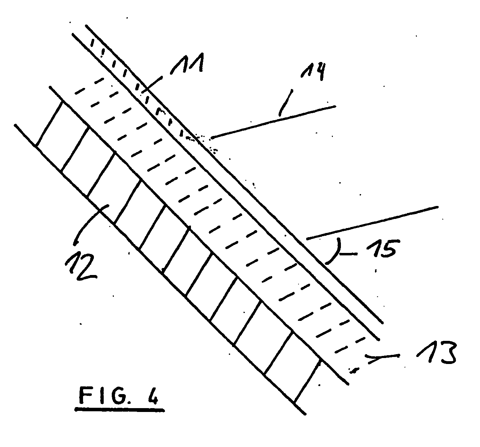

Die Figur 4, auf die jetzt Bezug genommen wird, zeigt die Anwendung einer solchen Schraube bei der Befestigung einer aus Holz bestehenden Längslatte 11 an einer Dachkonstruktionen 12 aus Porenbeton.

Die Dachkonstruktionen 12 besteht, wie bereits erwähnt, aus einem Porenbeton. Auf diese relativ feste Schicht aus Porenbeton wird eine Isolierschicht 13 aufgebracht, die aus einem Wärme dämmenden aber nicht belastbaren Material besteht. Darauf werden Längslatten 11 angebracht, an denen dann die Querlattung für Dachpfannen befestigt werden soll.

Die Befestigung mithilfe der Schrauben 14 ist durch Striche angedeutet. Das Dach verläuft abfallend beispielsweise unter einem Winkel von 45°. Die Schrauben 14 werden unter einem Einschraubwinkel 15 von beispielsweise 60° gegenüber der Oberfläche der Längslatten 11 eingeschraubt. Die Länge der Schrauben 14 und der drei Abschnitte ist so gewählt, dass nach dem vollständigen Einschrauben der Schrauben 14 der vordere Einschraubabschnitt mit dem Einschraubgewinde 8 vollständig in dem Porenbeton 12 angeordnet ist, dass der gewindefreie Abschnitt 9 in der Isolierschicht 13 angeordnet ist, und dass der Halteabschnitt 6 in der Längslatte 11 angeordnet ist. Die Längslatte 11 wird an der Schraube nur durch das Eingreifen des Gewindes 7 in das sie umgebende Material gehalten. Der Schraubenkopf 4 wird dabei versenkt, er wirkt aber bei der Festlegung nicht oder nur in vemachlässigbarem Ausmaß mit.

In den Figuren 1 bis 3 wird als Ausführungsbeispiel der Erfindung eine Schraube dargestellt, die zwei Gewindeabschnitte aufweist, die durch einen gewindefreien Schaftabschnitt voneinander getrennt sind. Ein zweites zeichnerisch nicht dargestelltes Ausführungsbeispiel der Erfindung verwendet eine Schraube, die einen ähnlichen oder gleichen Schraubenkopf aufweist wie die Schraube der Figur 1, bei der aber das Gewinde von der Unterseite des Schraubenkopfs bis zur Schraubenspitze durchgeht, ohne durch einen gewindefreien Schaftabschnitt unterbrochen zu sein. Eine solche Schraube, die auch als Gewindestange bezeichnet werden kann, kann ein vorderes Schraubenende aufweisen, das so aufgebaut ist wie bei der Schraube, die in Figur 1 dargestellt ist. Sie kann aber auch ein vorderes stumpfes Ende aufweisen, in welchem Fall dann die aus Porenbeton bestehende Unterlage 12 und das Holz vorgebohrt werden müsste.

Es ist ebenfalls möglich, dass eine Schraube mit zwei durch einen gewindefreien Schaftabschnitt verbundenen Gewindeabschnitten ähnlich wie oder wie in Figur 1 ein stumpfes vorderes Ende aufweist.

Zur Befestigung von Holzelementen an einer Unterlage aus Porenbeton, insbesondere zur Befestigung von Dachlatten an aus Porenbeton bestehenden Dachkonstruktionen, wird eine Schraube vorgeschlagen, die entweder ein über die gesamte Länge der Schraube durchgehendes Gewinde oder zwei durch einen gewindefreien Abschnitt voneinander getrennte Gewindeabschnitte aufweist, deren Gewindesteigungen identisch sind. Die Schraube wird derart verwendet, dass sie durch das Holzelement hindurch in den Porenbeton eingeschraubt wird. Die Festlegung der Schraube an dem Holzelement geschieht allein durch das Gewinde, das unterhalb des äußeren Endes der Schraube vorhanden ist. Ein möglicherweise vorhandener Schraubenkopf ist so klein ausgebildet, dass er im wesentlichen keine Zugkräfte auf das Holzmaterial ausübt.

## Patentansprüche

1. Schraube zur Befestigung in Porenbeton, mit
1.1 einem Schraubenschaft (1),
1.2 einem Antriebsende (3), und
1.3 einem bis in den Bereich des Antriebsendes (3) reichenden Gewinde (7, 8), wobei
1.4 das Antriebsende (3) des Schraubenschafts (1) einen Schraubenkopf (4) aufweist, dessen Außendurchmesser maximal das 1,5-fache des Außendurchmessers des Gewindes (7) beträgt **dadurch gekennzeichnet, dass**
1.5 die Schraube mit einer Zinklamellenbeschichtung versehen ist.

2. Schraube nach Anspruch 1, bei der der Schraubenschaft (1) einen von dem Antriebsende (3) ausgehenden Halteabschnitt (6) mit einem mindestens teilweise ausgebildeten Haltegewinde (7), einen sich daran anschließenden gewindefreien Schaftabschnitt (9) und einen vorderen Einschraubabschnitt mit einem Gewinde (8) und einem vorderen Schraubenende aufweist, wobei die Steigung der Gewinde (7, 8) in beiden Gewindeabschnitten gleich ist.

3. Schraube nach einem Anspruch 2, bei der das Haltegewinde (7) ein Doppelganggewinde ist.

4. Schraube nach einem der vorhergehenden Ansprüche, bei der die Gewindehöhe des Gewindes (8) im Einschraubabschnitt größer ist als im Halteabschnitt (6).

5. Verwendung einer Schraube nach einem der vorhergehenden Ansprüche zur Befestigung eines Holzelements (11) an einer aus Porenbeton bestehenden Unterlage (12), wobei die Festlegung des Holzelements (11) im wesentlichen vollständig durch das Gewinde (7, 8) erfolgt.

6. Verwendung nach Anspruch 5, bei der die Schraube solange eingeschraubt wird, bis die Oberseite des Antriebsendes (3) des Halteabschnitts (6) bündig mit der Oberseite des Holzelements (11) verläuft.

7. Verwendung nach Anspruch 5 oder 6, bei der die aus Porenbeton bestehende Unterlage (12) vorgebohrt wird.

8. Verwendung nach einem der Ansprüche 5 bis 7, wobei bei einer Schraube nach einem der Ansprüche 2 bis 4 der Halteabschnitt (6) in dem Holzelement (11) und der Einschraubabschnitt in der Unterlage (12) angeordnet wird.

9. Verwendung nach einem der Ansprüche 5 bis 8 zur Befestigung eines Holzelements (11) unter Zwischenlage einer Isolierungsschicht (13) an einer Unterlage (12) aus Porenbeton, wobei bei einer Schraube nach einem der Ansprüche 2 bis 4 der gewindefreie Abschnitt (9) in der Isolierungsschicht (13) angeordnet wird.

10. Verwendung nach einem der Ansprüche 5 bis 9, bei der die Schraube unter einem Winkel (15) gegenüber der Oberfläche des Holzelements (11) eingeschraubt wird, der im Bereich von etwa 60° liegt.

11. Verwendung nach Anspruch 10, bei der der Kosekans des Einschraubwinkels (15) multipliziert mit der Dicke der Isolierschicht (13) der Länge des gewindefreien Abschnitts (9) entspricht.

12. Verwendung nach einem der Ansprüche 5 bis 11 zur Befestigung an einem Porenbeton der Härte im Bereich der PP 4.0.

13. Verwendung nach einem der Ansprüche 5 bis 12 bei einer Isolierungsschicht (13) aus Porenbeton der Härte 0,5.

14. Verwendung nach einem der Ansprüche 5 bis 13, bei dem in dem zu befestigenden Element (11) eine Vorbohrung für die Schraube durchgeführt wird.

## Claims

1. A screw for fastening in aerated concrete, with
1.1 a screw shaft (1),
1.2 an actuating end (3) and
1.3 a thread (7, 8) extending into the area of the actuating end (3), whereby
1.4 the actuating end (3) of the screw shaft (1) has a screw head (4), the outer diameter of which is a maximum of 1.5 times the outer diameter of the thread (7), **characterised in that**
1.5 the screw is provided with a zinc lamellar coating.

2. The screw according to claim 1 in which the screw shaft (1) has a holding section (6) starting from the actuating end (3) with a partially formed holding thread (7), an adjoining thread-free shaft section (9) and a forward screw-in section with a thread (8) and a forward screw end, whereby the pitch of the thread (7, 8) in both thread sections is identical.

3. The screw according to claim 2 in which the holding thread (7) is a double thread.

4. The screw according to any one of the preceding claims in which the height of the thread (8) in the screw-in section is greater than in the holding section (6).

5. Use of a screw according to any one of the preceding claims for fastening a wooden element (11) to a substrate (12) formed of aerated concrete, whereby the wooden element (11) is essentially completely attached through the thread (7, 8).

6. Use according to claim 5 in which the screw is screwed in until the upper side of the actuating end (3) of the holding section (6) is flush with the upper side of the wooden element (11).

7. Use according to claim 5 or 6 in which the substrate (12) consisting of aerated concrete is pre-drilled.

8. Use according to any one of claims 5 to 7 whereby in a screw in accordance with any one of claims 2 to 4 the holding section (6) is arranged in the wooden element (11) and the screw-in section in the substrate (12).

9. Use according to any one of claims 5 to 8 to fasten a wooden element (11) to a substrate (12) of aerated concrete with the intermediate application of an insulating layer (13) whereby in a screw in accordance with any one of claims 2 to 4 the thread-free section (9) is arranged in the insulating layer (13).

10. User according to any one of claims 5 to 9 whereby the screw is screwed in at an angle (15) to the surface of the wooden element which is in the range of around 60°.

11. Use according to claim 10, in which the cosecant of the screwing-in angle (15) multiplied by the thickness of the insulating layer (13) corresponds to the length of the thread-free section (9).

12. Use according to any one of claims 5 to 11 for fastening to aerated concrete of a hardness in the range of PP 4.0.

13. Use according to any one of claims 5 to 12 with an insulation layer (13) made of aerate concrete of hardness 0.5.

14. Use according to any one of claims 5 to 13 in which pre-drilling for the screw takes place in the element (11) to be attached.

## Revendications

1. Vis destinée à la fixation dans du béton cellulaire, avec
1.1 une tige de vis (1),
1.2 une extrémité d'entraînement (3), et
1.3 un filetage (7, 8) s'étendant jusque dans la région de l'extrémité d'entraînement (3), dans laquelle
1.4 l'extrémité d'entraînement (3) de la tige de vis (1) comporte une tête de vis (4), dont le diamètre extérieur mesure au maximum 1,5 fois le diamètre extérieur du filetage (7), **caractérisée en ce que**
1.5 la vis est pourvue d'un revêtement à base de lamelles de zinc.

2. Vis selon la revendication 1, dans laquelle la tige de vis (1) comporte une portion de maintien (6) partant de l'extrémité d'entraînement (3), avec un filetage de maintien (7) formé au moins partiellement, suivie d'une portion de tige (9) dépourvue de filetage, et une portion de vissage avant avec un filetage (8) et une extrémité de vis avant, dans laquelle le pas des filetages (7, 8) est identique dans les deux portions filetées.

3. Vis selon la revendication 2, dans lequel le filetage de maintien (7) est un double filetage.

4. Vis selon l'une des revendications précédentes, dans laquelle la hauteur de filetage du filetage (8) est plus grande dans la portion de vissage que dans la portion de maintien (6).

5. Utilisation d'une vis selon l'une des revendications précédentes, pour la fixation d'un élément en bois (11) à un support (12) constitué de béton cellulaire, dans laquelle la fixation de l'élément en bois (11) est réalisée quasiment entièrement à l'aide du filetage (7, 8).

6. Utilisation selon la revendication 5, dans laquelle la vis est vissée jusqu'à ce que le côté supérieur de l'extrémité d'entraînement (3) de la portion de maintien (6) s'étende en affleurement avec le côté supérieur de l'élément en bois (11).

7. Utilisation selon la revendication 5 ou 6, dans laquelle le support (12) constitué de béton cellulaire est préalablement percé.

8. Utilisation selon l'une des revendications 5 à 7, dans laquelle, avec une vis selon l'une des revendications 2 à 4, la portion de maintien (6) est prévue dans l'élément en bois (11), tandis que la portion de vissage est prévue dans le support (12).

9. Utilisation selon l'une des revendications 5 à 8, pour la fixation d'un élément en bois (11) à un support (12) en béton cellulaire, en intercalant une couche isolante, dans laquelle, avec une vis selon l'une des revendications 2 à 4, la portion dépourvue de filetage (9) est prévue dans la couche isolante (13).

10. Utilisation selon l'une des revendications 5 à 9, dans laquelle la vis est vissée en formant un angle (15) d'environ 60° par rapport à la surface de l'élément en bois (11).

11. Utilisation selon la revendication 10, dans laquelle la cosécante carrée de l'angle de vissage (15) multipliée par l'épaisseur de la couche isolante (13) correspond à la longueur de la portion dépourvue de filetage (9).

12. Utilisation selon l'une des revendications 5 à 11, pour la fixation dans du béton cellulaire d'une dureté correspondant à environ PP 4.0.

13. Utilisation selon l'une des revendications 5 à 12, avec une couche isolante (13) en béton cellulaire d'une sureté de 0,5.

14. Utilisation selon l'une des revendications 5 à 13, dans laquelle un perçage préalable est prévu dans l'élément à fixer (11), pour la vis.
